# EUROPÄISCHE PATENTANMELDUNG

(11) **EP 3 561 565 A1**
(43) Veröffentlichungstag der Anmeldung: **30.10.2019**
(21) Anmeldenummer: 19167891.1
(22) Anmeldetag: 08.04.2019
(51) Int. Cl.: G02B 6/44

(54) **KASSETTE ZUR AUFNAHME VON LICHTWELLENLEITERN SOWIE SYSTEM ZUR VERBINDUNG VON WENIGSTENS ZWEI LICHTWELLENLEITERN**

(30) Priorität: 23.04.2018 DE 102018109668
(71) Anmelder: Langmatz GmbH, 82467 Garmisch-Partenkirchen (DE)
(72) Erfinder:
(74) Vertreter: Prinz & Partner mbB

(57) **Zusammenfassung**

Eine Kassette, insbesondere eine Spleißkassette zur Aufnahme von Lichtwellenleitern, hat einen Boden (18), der eine erste Aufnahmeseite (20) und eine zweite Aufnahmeseite (22) aufweist, wobei die beiden Aufnahmeseiten (20, 22) unabhängig voneinander zu nutzen sind und jede der beiden Aufnahmeseiten (20, 22) einen Fasereingang (32), einen Faserausgang (34) und einen Faserverbindungsbereich (38) aufweist, wobei die Faserverbindungsbereiche (38) der beiden Aufnahmeseiten (20, 22) in unterschiedlichen Flächenabschnitten (F₁, F₂) der Kassette (10) angeordnet sind.

Ferner ist ein System zur Verbindung von wenigstens zwei Lichtwellenleitern gezeigt.

## Beschreibung

Die Erfindung betrifft eine Kassette zur Aufnahme von Lichtwellenleitern sowie ein System zur Verbindung von wenigstens zwei Lichtwellenleitern.

Lichtwellenleiter dienen in der modernen Telekommunikationstechnologie zur Übertragung von Daten nicht nur zwischen Knotenpunkten, sondern auch zu einzelnen Abnehmern, z.B. Haushalten. Hierzu ist ein aufwendiges Netz an Lichtwellenleitern notwendig, die miteinander optisch verbunden werden müssen.

Diese Verbindungen können über Spleißverbindungen realisiert werden, die besonders platzsparend sind, denn insbesondere in Bereichen mit vielen Abnehmern, wie Wohngebieten, müssen sehr viele Lichtwellenleiter auf kleinem Raum miteinander verbunden werden.

Hierzu sind Verteilerschränke bekannt, in denen eine Vielzahl an Kassetten, sogenannte Spleißkassetten, in Kassettenhaltern eingesetzt werden. In jeder der Kassetten kann ein oder mehrere Spleiße oder anderweitige Verbindungen von Lichtwellenleitern sicher aufgenommen werden.

Die Kassetten weisen üblicherweise einen Faserverbindungsbereich auf, in dem die Verbindungen bzw. Spleiße zwischen den Lichtwellenleitern abgelegt und sicher verstaut werden können, und einen Faserablagebereich, in dem Überlängen von Lichtwellenleitern sicher aufgewickelt werden können.

Um die Sicherheit und Qualität der Verbindungen zu erhöhen, beispielsweise um Fehlkontaktierungen und Übersprechen zwischen verschiedenen Lichtwellenleitern auszuschließen, wird eine Kassette üblicherweise nur zur Verbindung von zwei Lichtwellenleitern (ein Spleiß) oder vier Lichtwellenleitern (zwei Spleiße) verwendet. Somit ist die Anzahl an möglichen Spleißen in einem Verteilerschrank durch die Anzahl an Aufnahmen für Kassetten am Kassettenhalter beschränkt.

Es ist daher Aufgabe der Erfindung, eine solche Kassette und ein solches System bereitzustellen, die eine größere Anzahl an Spleißen bei gleichbleibenden Sicherheits- und Qualitätsanforderungen ermöglichen.

Die Aufgabe wird gelöst durch eine zweiseitige Kassette, insbesondere eine zweiseitige Spleißkassette, zur Aufnahme von Lichtwellenleitern, mit einem Boden, der eine erste Aufnahmeseite und eine zweite Aufnahmeseite aufweist, wobei die beiden Aufnahmeseiten unabhängig voneinander zu nutzen sind und jede der beiden Aufnahmeseiten einen Fasereingang, einen Faserausgang und einen Faserverbindungsbereich aufweist, wobei die Faserverbindungsbereiche der beiden Aufnahmeseiten in unterschiedlichen Flächenabschnitten der Kassette angeordnet sind.

Unter einem Flächenabschnitt wird im Rahmen dieser Erfindung der gesamte Teil - erste wie zweite Seite - der Kassette verstanden, der in Draufsicht auf eine der Aufnahmeseiten der Kassette in einem bestimmten Abschnitt liegt. In einen vorgegebenen Flächenabschnitt fallen somit alle Strukturen auf beiden Seiten der Kassette, die in dem bestimmten Abschnitt liegen.

Durch eine solche zweiseitige Kassette ist es möglich, die doppelte Anzahl an Verbindungen zwischen Lichtwellenleitern in einer Kassette mit unveränderter Dicke bei gleichbleibenden Sicherheits- und Qualitätsanforderungen zu realisieren.

Die Erfindung beruht auf der Erkenntnis, dass die erfindungsgemäße beidseitige Kassette im Vergleich mit einer bekannten, einseitigen Kassette, die nur eine Aufnahmeseite hat, mit der gleichen Dicke ausgeführt werden kann und nicht die doppelte Dicke benötigt wird.

Die notwendige Dicke der Kassette ist durch das Faserverbindungselemente vorgegeben, das im Faserverbindungsbereich angeordnet werden soll. Diese Faserverbindungselement ist jedoch nur in einem bestimmten Flächenabschnitt der Kassette notwendig, sodass auch nur dieser Flächenabschnitt die entsprechende Dicke zwingend benötigt.

Anders ausgedrückt wurde erkannt, dass nicht für alle Bereiche der Aufnahmeseiten die volle Dicke der Kassette benötigt wird, sondern dass insbesondere die Faserablagebereiche mit einer verringerten Dicke auskommen können. Daher kann eine Kassette mit zwei Aufnahmeseiten zur Aufnahme von Glasfasern realisiert werden, wenn lediglich die Faserverbindungsbereiche die nahezu gesamte Dicke der Kassette einnehmen.

Die beiden Aufnahmeseiten sind unabhängig voneinander, um Wechselwirkungen zwischen den Lichtwellenleitern zu verhindern.

Unabhängig bedeutet im Rahmen dieser Erfindung, dass die Lichtwellenleiter bei vorgesehener Benutzung nicht durch den Boden hindurch von einer Aufnahmeseite zur anderen geführt werden, zumindest nicht unter Einhaltung der minimalen Biegeradien. Die minimalen Biegeradien für übliche Glasfasern liegen bei 30 mm.

Der Boden ist insbesondere durchgängig, sodass die Aufnahmeseiten voneinander getrennt sind. Dadurch können keine Lichtwellenleitern von einer Aufnahmeseite zur anderen geführt werden, zumindest nicht unter Einhaltung der minimalen Biegeradien von unter 50 mm.

Dabei können die Aufnahmeseiten an entgegengesetzten Seitenfläche des Bodens ausgebildet sein.

Außerdem können der Fasereingang und/oder der Faserausgang der Aufnahmeseiten in Draufsicht auf eine der Aufnahmeseiten in demselben Bereich der Kassette liegen.

Beispielsweise können der Fasereingang und der Faserausgang am selben Rand der Kassette angeordnet sein.

Die Faserverbindungsbereiche können an dem zum Fasereingang und/oder zum Faserausgang entgegengesetzten Rand oder benachbarten Rand der Kassette angeordnet sein. Alternativ oder zusätzlich kann der Faserablagebereich zumindest teilweise zwischen dem Faserverbindungsbereich und dem Fasereingang und/oder dem Faserausgang angeordnet sein.

Im Rahmen dieser Erfindung sollen die Begriffe "Faser" und "Glasfaser" jede Art von Lichtwellenleitern umfassen.

Vorzugsweise weist die Kassette wenigstens einen Überlappabschnitt auf, in dem sowohl die erste Aufnahmeseite als auch die zweite Aufnahmeseite zumindest teilweise genutzt sind. Auf diese Weise kann der Raum im Überlappabschnitt effizient verwendet werden, da er von beiden Aufnahmeseiten gleichermaßen verwendet werden kann. Deswegen ist eine Vergrößerung der Dimensionen der Kassette nicht notwendig. Der Überlappabschnitt ist ein spezieller Flächenabschnitt.

Zum Beispiel liegt der Faserablagebereich zumindest teilweise im Überlappabschnitt.

Um einen oder mehrere Spleiße sicher abzulegen, kann der Faserverbindungsbereich eine Spleißschutzablage aufweisen, beispielsweise eine Spleißschutzablage für Crimp- und/oder Schrumpfspleiße. Zum Beispiel können genau zwei oder vier Spleiße in der Spleißschutzablage abgelegt werden.

Vorzugsweise steht den Faserverbindungsbereichen die volle nutzbare Dicke der Kassette zur Verfügung und/oder in den Flächenabschnitten, in denen die Faserverbindungsbereiche angeordnet sind, ist jeweils nur eine der Aufnahmeseiten ausgebildet. Dadurch werden die Bereiche, die die größte Bauhöhe aufweisen, nebeneinander angeordnet, sodass die Dicke der Kassette klein gehalten werden kann.

Die volle nutzbare Dicke bezeichnet dabei die Dicke der Kassette abzüglich der Stärke des Bodens und gegebenenfalls der Stärke eines Deckels, der an der Kassette befestigt werden kann.

In einer Ausführungsform der Erfindung weist jede der beiden Aufnahmeseiten vom Boden abstehende Wände auf, die jeweils einen Aufnahmeraum zur Aufnahme von Lichtwellenleitern je Aufnahmeseite begrenzen, wobei die Wände einer der Aufnahmeseiten in einer gemeinsamen Abschlussebene des jeweiligen Aufnahmeraumes enden. Auf diese Weise lassen sich platzsparend Aufnahmeräume realisieren.

Insbesondere sind die Abschlussebenen parallel zueinander. Der Abstand der Abschlussebenen liegt zum Beispiel bei etwa 5 mm. Der Abstand entspricht dabei der Dicke der Kassette.

Vorzugsweise hat jeder der Aufnahmeräume einen flachen Abschnitt mit einer ersten Höhe und einen tiefen Abschnitt mit einer zweiten Höhe, wobei die erste Höhe kleiner ist als die zweite Höhe. Dadurch können die Höhen der Aufnahmeräume an den tatsächlichen Platzbedarf der jeweiligen Bereiche angepasst werden.

Die Höhe ist dabei der Abstand vom Boden zur entsprechenden Abschlussebene. Die flachen Abschnitte der beiden Aufnahmeräume liegen zum Beispiel teilweise, insbesondere vollständig im Überlappabschnitt und/oder die flachen Abschnitte liegen in demselben Flächenabschnitt.

Für eine besonders effiziente Nutzung des Platzes verläuft der Boden in einem tiefen Abschnitt einer der Aufnahmeräume in der Abschlussebene des jeweils anderen der Aufnahmeräume.

Der Boden kann daher zumindest teilweise in jeder der beiden Abschlussebenen verlaufen.

Beispielsweise sind die Faserverbindungsbereiche im tiefen Abschnitt ihres Aufnahmeraumes vorgesehen und/oder jeweils ein Faserablagebereich ist zumindest teilweise im flachen Abschnitt jedes Aufnahmeraumes vorgesehen. Dadurch wird jeweils nur die für die Funktion des entsprechenden Bereiches tatsächlich benötigte Höhe belegt.

In einer Ausgestaltung der Erfindung weist die Kassette einen Fasereingangskanal und/oder einen Faserausgangskanal auf, wobei der Fasereingangskanal und/oder der Faserausgangskanal durch einen Kanalboden in eine erste Seite, die der ersten Aufnahmeseite zugeordnet ist, und in eine zweite Seite geteilt ist, die der zweiten Aufnahmeseite zugeordnet ist. Dabei kann der Fasereingangskanal in die Fasereingänge und Faserausgangskanal in die Faserausgänge münden. Durch die Kanäle lassen sich Lichtwellenleiter sicher in die entsprechende Aufnahmeseite führen.

Der Kanalboden kann sich durchgängig vom Anfang des Faserausgangskanals bzw. des Fasereingangskanals bis zum Übergang des Kanals an den Grundkörper erstrecken.

Die Kassette kann wenigstens ein Befestigungsmittel aufweisen, insbesondere wobei das Befestigungsmittel zur schwenkbaren Befestigung der Kassette an einem Kassettenhalter dient. Auf diese Weise wird die Montage der Kassette im Kassettenhalter vereinfacht.

Zum Beispiel kann die Kassette durch einen Zapfen schwenkbar in einem Kassettenhalter befestigt werden. Dabei kann der Zapfen mit den Kanälen koaxial ausgeführt sein.

Um die Faserverbindungsbereiche trotz ihres Platzbedarfes effizient anzuordnen, kann der Faserverbindungsbereich der zweiten Aufnahmeseite an einem Rand der Kassette angeordnet sein, wobei der Faserverbindungsbereich der ersten Aufnahmeseite an den Faserverbindungsbereich der zweiten Aufnahmeseite angrenzt, insbesondere an der vom Rand abgewandten Seite angrenzt und/oder beabstandet vom Rand ist.

In einer weiteren Ausführungsform der Erfindung ist der Faserverbindungsbereich der ersten Aufnahmeseite an einem ersten Rand der Kassette angeordnet und der Faserverbindungsbereich der zweiten Aufnahmeseite ist an einem zweiten Rand der Kassette angeordnet, wobei der ersten Rand zum zweiten Rand entgegengesetzt ist. Dadurch lässt sich der Bereich zwischen den Rändern flexibel nutzen.

Zum Beispiel sind die Fasereingänge und die Faserausgänge an einem weiteren Rand der Kassette angeordnet.

Die Kassette kann, abgesehen vom Befestigungsmittel, drehsymmetrisch um eine Achse sein, die parallel zu den beiden Abschlussebenen und durch die Mitte der Kassette verläuft.

Vorzugsweise liegt der Boden am ersten Rand in der Abschlussebene des zweiten Aufnahmeraumes, am zweiten Rand liegt der Boden in der Abschlussebene des ersten Aufnahmeraumes und der Boden verläuft zumindest in der Mitte zwischen dem ersten Rand und dem zweiten Rand mittig zwischen den beiden Abschlussebenen. Auf diese Weise können große und flächige Faserablagebereiche realisiert werden.

Der Boden kann zumindest einen schrägen Abschnitt zwischen dem ersten Rand, der Mitte und dem zweiten Rand aufweisen.

In einer Ausführungsvariante sind die erste Aufnahmeseite und die zweite Aufnahmeseite im Wesentlichen identisch ausgeführt, um die Bestückung mit Lichtwellenleitern zu vereinfachen.

Beispielsweise beträgt die Dicke der Kassette etwa 5 mm. Die Dicke kann als der Abstand der beiden Abschlussebenen betrachtet werden. Durch eine Dicke von 5 mm oder weniger belegt die Kassette in einem üblichen Kassettenhalter, der einen Aufnahmeabstand von 7,5 mm hat, nur eine einzige Aufnahme.

Ferner wird die Aufgabe gelöst durch ein System zur Verbindung von wenigstens zwei Lichtwellenleitern, mit einer erfindungsgemäßen Kassette und einem Faserverbindungselement, insbesondere einem Spleißschutz, das eine vorgegebene Bauhöhe aufweist, wobei die Dicke der Kassette kleiner als das 1,6-fache der Bauhöhe des Faserverbindungselementes ist, insbesondere im Wesentlichen der Bauhöhe des Faserverbindungselementes entspricht.

Das Faserverbindungselement kann ein Spleißschutz, wie ein Schrumpf- oder Crimpspleißschutz sein, aber auch ein Splitter, eine Kupplung oder dergleichen.

Selbstverständlich sind von der Erfindung auch ein System aus Kassetten mit dem entsprechenden Kassettenhalter, auch Organzier genannt, und ein Verteilerschrank mit einem solchen System umfasst.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 eine erste Ausführungsform einer erfindungsgemäßen Kassette in perspektivischer Ansicht auf eine erste Aufnahmeseite,
- Figur 2 die Kassette nach Figur 1 in einer perspektivischen Ansicht auf eine zweite Aufnahmeseite,
- Figur 3 eine Draufsicht auf die erste Aufnahmeseite der Kassette nach Figur 1,
- Figur 4 eine Schnittansicht der Kassette entlang der Linie IV-IV der Figur 3,
- Figur 5 eine Draufsicht auf die zweite Aufnahmeseite der Kassette nach Figur 1,
- Figur 6 eine perspektivische Ansicht einer zweiten Ausführungsform einer erfindungsgemäßen Kassette,
- Figur 7 eine Schnittansicht durch die Kassette nach Figur 6 entlang der Linie VII-VII,
- Figur 8 eine Draufsicht auf die erste Aufnahmeseite der Kassette nach Figur 6,
- Figur 9 eine Draufsicht auf die zweite Aufnahmeseite der Kassette nach Figur 6,
- die Figuren 10a, 10b und 10c ein erfindungsgemäßes System mit einer Kassette gemäß Figur 1 teilweise im Schnitt, in Draufsicht auf die erste Aufnahmeseite bzw. in Draufsicht auf die zweite Aufnahmeseite, und
- die Figuren 11a und 11b eine zweite Ausführungsform eines erfindungsgemäßen Systems mit einer Kassette gemäß Figur 6 teilweise im Schnitt und in Draufsicht auf eine der Aufnahmeseiten.

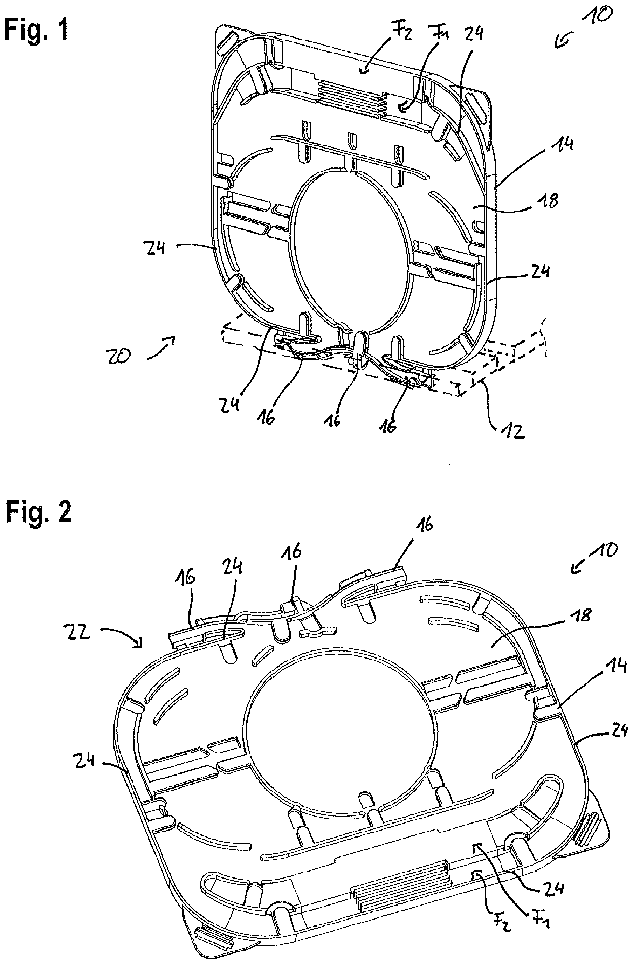

In den Figuren 1 bis 5 ist eine erste Ausführungsform einer Kassette 10 gezeigt, die dafür vorgesehen ist, in einem Verteilerschrank für Lichtwellenleiter verwendet zu werden.

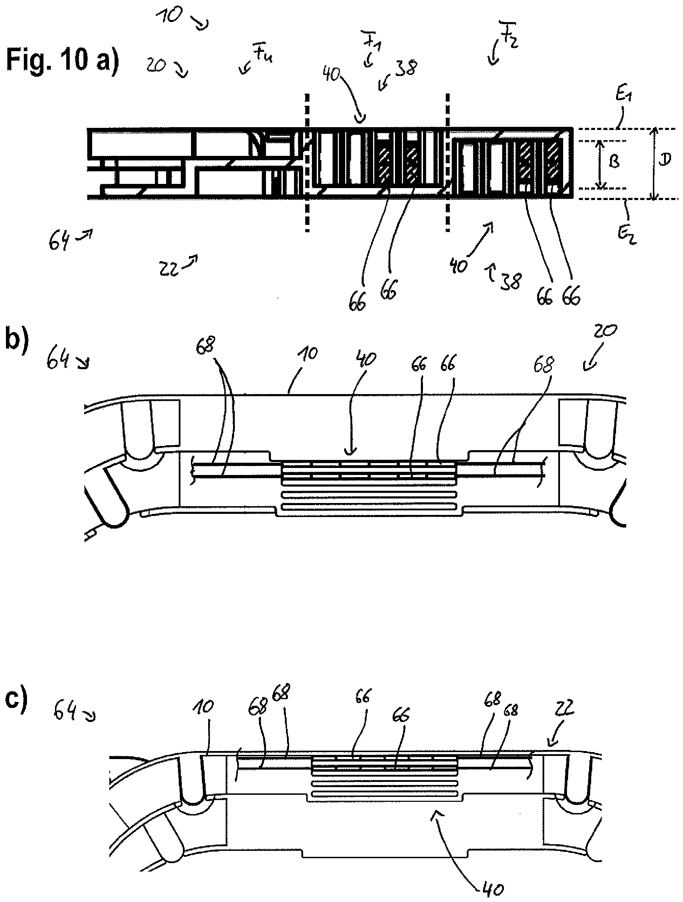

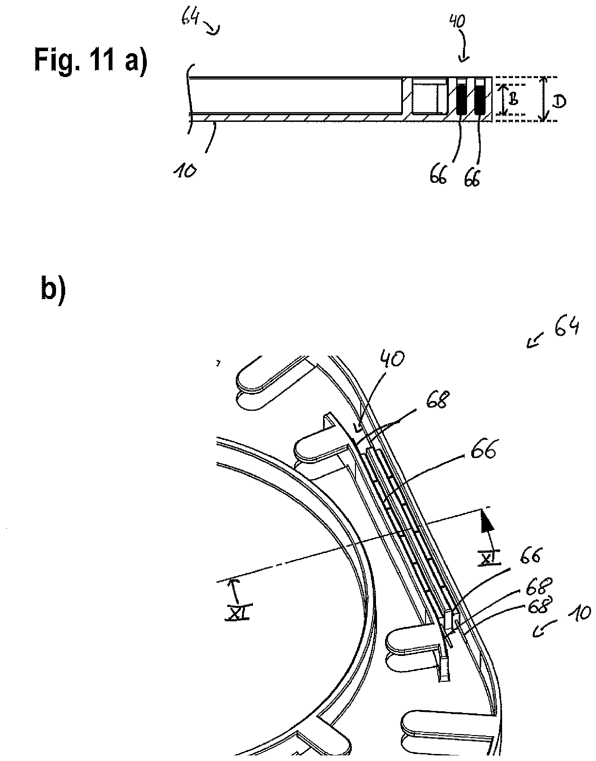

Solche Kassetten 10 werden auch Spleißkassetten genannt, da sie dazu dienen, eine Verbindung, üblicherweise eine Spleißverbindung, zwischen zwei Lichtwellenleitern 68 sicher abzulegen (vgl. Figuren 10 und 11).

Die Kassette 10 kann in an sich bekannter Weise in einen Kassettenhalter 12 (in Figur 1 gestrichelt angedeutet) lösbar eingesetzt werden. Der Kassettenhalter 12 weist üblicherweise übereinander angeordnete Aufnahmen auf, in die jeweils eine Kassette 10 eingesetzt werden kann, sodass sich ein Kassettenstapel bildet.

Üblicherweise sind die Aufnahmen 7,5 mm voneinander beabstandet, sodass eine Kassette 10 mit einer Dicke von 5 mm eine Aufnahme besetzt. Eine übliche Kassette mit einer Dicke von 10 mm belegt somit zwei Aufnahmen.

Die Kassette 10 ist z. B. vollständig einstückig hergestellt, vorzugsweise ist die Kassette 10 ein Spritzgussteil.

Die Kassette 10 hat einen Grundkörper 14, der plattenförmig ausgeführt ist, und mehrere Funktionsteile 16, die zur Befestigung der Kassette 10 am Kassettenhalter 12 oder zur Ein- und Ausspeisung eines Lichtwellenleiters dienen.

Der Grundkörper 14 hat in den gezeigten Ausführungsbeispielen eine in etwa rechteckige Form, jedoch ist auch eine im Wesentlichen elliptische oder dreieckige Form denkbar. Er hat zwei Seitenflächen, die auch als Ober- oder Unterseite bezeichnet werden können, und vier Ränder, die die Seitenflächen begrenzen.

Der Grundkörper 14 umfasst einen Boden 18, der sich im Wesentlichen über den gesamten plattenartigen Grundkörper 14 erstreckt. Dementsprechend hat der Boden 18 ebenfalls zwei Seitenflächen.

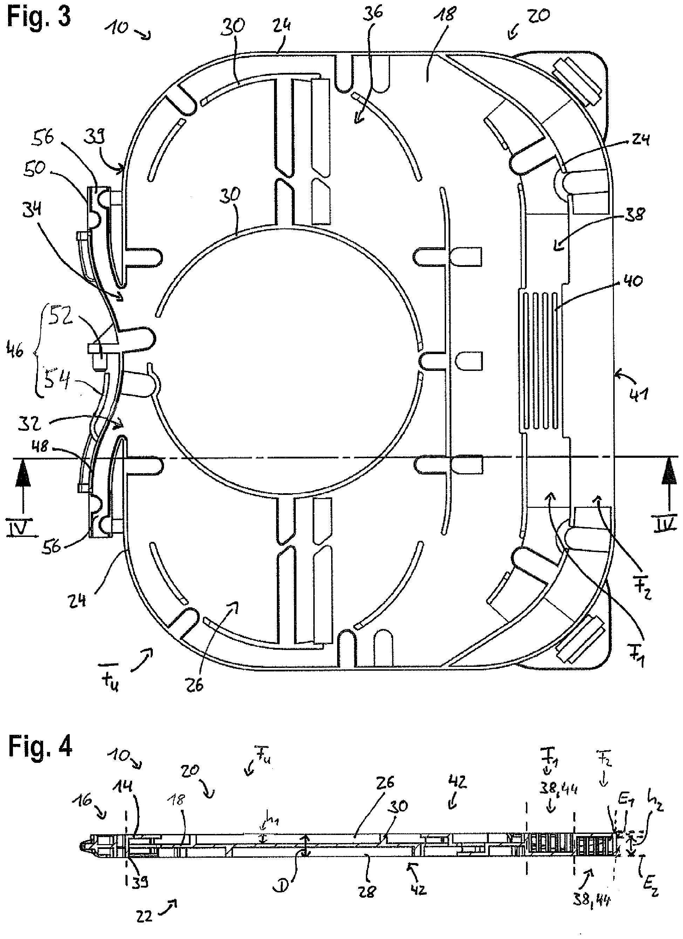

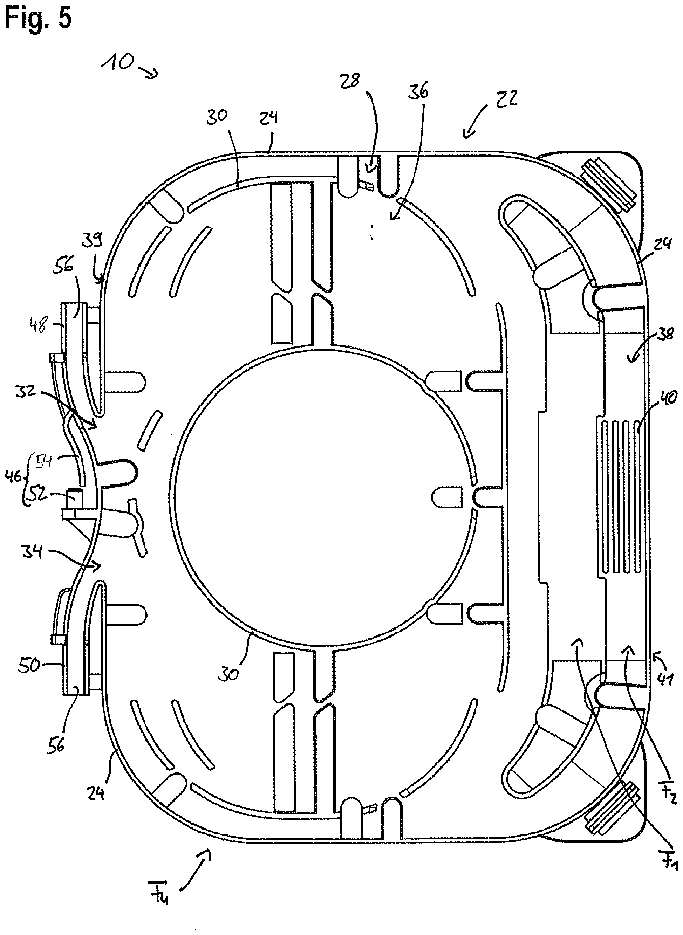

Jede der beiden Seitenflächen ist als Aufnahmeseite für Lichtwellenleiter ausgebildet, sodass der Boden 18 eine erste Aufnahmeseite 20 (Figuren 1 und 3) und eine zweite Aufnahmeseite 22 (Figuren 2 und 5) aufweist.

Die Aufnahmeseiten 20, 22 sind daher an entgegengesetzten Seitenflächen des Bodens 18 bzw. des Grundkörpers 14 ausgebildet.

Der Boden 18 ist insbesondere durchgängig, sodass die Aufnahmeseiten 20, 22 voneinander getrennt sind. Dadurch können keine Lichtwellenleitern von einer Aufnahmeseite zur anderen geführt werden, zumindest nicht unter Einhaltung der minimalen Biegeradien von üblicherweise unter 50 mm.

Wie in der Schnittansicht der Figur 4 gut zu erkennen ist, erstrecken sich Wände 24 auf beiden Aufnahmeseite 20, 22 vom Boden 18 aus, insbesondere stehen die Wände 24 senkrecht auf dem Boden 18.

Die Wände 24 verlaufen größtenteils entlang der Ränder des Grundkörpers 14, also der Kassette 10.

Die Wände 24 der ersten Aufnahmeseite 20 enden mit ihrem vom Boden 18 abgewandten Ende in der gleichen Ebene, die im Folgenden als Abschlussebene E₁ der ersten Aufnahmeseite 20 bezeichnet wird.

Durch die Wände 24 und den Boden 18 wird somit auf der ersten Aufnahmeseite 20 ein erster Aufnahmeraum 26 begrenzt.

Der erste Aufnahmeraum 26 ist somit das Volumen zwischen dem Boden 18, der ersten Abschlussebene E₁ und den Wänden 24 auf der ersten Aufnahmeseite 20 des Bodens 18.

In gleicher Weise erstrecken sich die Wände 24 auf der zweiten Aufnahmeseite 22 vom Boden 18 aus und enden ebenfalls alle in einer Abschlussebene E₂ der zweiten Aufnahmeseite 22.

Auch durch die Wände 24 der zweiten Aufnahmeseite 22, dem Boden 18 und der zweiten Abschlussebene E₂ wird ein zweiter Aufnahmeraum 28 begrenzt.

Die beiden Abschlussebenen E₁ und E₂ sind parallel zueinander und stellen insbesondere die maximale Ausdehnung, also die Dicke der Kassette 10 in Richtung senkrecht zum plattenartigen Grundkörper 14 dar.

Die Dicke D der Kassette 10 ergibt sich daher aus dem Abstand der beiden Abschlussebenen E₁, E₂.

Die Dicke D der Kassette 10 ist beispielsweise 5 mm.

In den beiden Aufnahmeräumen 26, 28, d. h. an den Aufnahmeseiten 20, 22, sind Führungselemente 30 vorgesehen, die sich ebenfalls vom Boden 18 aus erstrecken.

Die Führungselemente 30 dienen dazu, Lichtwellenleiter in den Aufnahmeräumen 26, 28 bzw. an den Aufnahmeseiten 20, 22 so zu führen, dass eine sichere Ablage der Lichtwellenleiter unter Einhaltung der notwendigen Mindestbiegeradien sicher und problemlos möglich ist. Der Mindestbiegeradius von üblichen Glasfasern, die nicht biegeoptimiert sind, liegt zum Beispiel bei 30 mm.

Außerdem können an den Wänden 24 und den Führungselementen 30 Befestigungslaschen vorgesehen sein, die sich insbesondere in den Abschlussebenen E₁, E₂ erstrecken.

Durch die Führungselemente 30 werden die Aufnahmeseiten 20, 22 bzw. Aufnahmeräume 26, 28 strukturiert, wobei im Folgenden vereinfachend lediglich auf die Aufnahmeseiten 20, 22 Bezug genommen wird. Das Gesagte gilt selbstverständlich auch für die Aufnahmeräume 26, 28.

Die Aufnahmeseiten 20, 22 weisen jeweils einen Fasereingang 32, einen Faserausgang 34, einen Faserablagebereich 36 und einen Faserverbindungsbereich 38 auf. Wie in den Figuren 3 und 5 zu erkennen, sind der Fasereingang 32 und der Faserausgang 34 an einem Rand 39 des Grundkörpers 14 bzw. der Kassette 10 benachbart ausgebildet.

Beispielsweise können der Fasereingang 32 und der Faserausgang 34 am selben Rand der Kassette angeordnet sein.

Der Fasereingang 32 und der Faserausgang 34 werden durch Öffnungen in den Wänden 24 gebildet.

An den Fasereingang 32 und den Faserausgang 34 grenzen sowohl auf der ersten Aufnahmeseite 20 als auch auf der zweiten Aufnahmeseite 22 der Faserablagebereich 36 an.

Der Faserablagebereich 36 weist ein fast vollständig kreisförmiges Führungselement 30 auf, an dem Überlängen von Lichtwellenleitern abgelegt werden können.

Denkbar ist selbstverständlich auch, dass ein als solches bekanntes Führungselement aus mehreren Halbkreisen oder Ellipsen vorgesehen ist, das es erlaubt, die Richtung des Lichtwellenleiters zu wechseln. Dadurch sind die Lichtwellenleiter richtungsunabhängig verbindbar.

Auf der ersten Aufnahmeseite 20 schließt an den Faserablagebereich 36 der Faserverbindungsbereich 38 unmittelbar an und zwar auf der vom Fasereingang 32 und Faserausgang 34 abgewandten Seite.

Der Faserverbindungsbereich 38 weist eine Spleißschutzablage 40 auf, in der Crimp- und/oder Schrumpfspleiße abgelegt und an der Kassette 10 befestigt werden können.

Solche Spleißschutzablagen 40 sind an sich bekannt. Zum Beispiel können im Faserverbindungsbereich 38 vier Spleiße befestigt werden.

Zwischen dem Faserverbindungsbereich 38 und dem Rand 41, der dem Fasereingang 32 bzw. Faserausgang 34 entgegengesetzt ist, ist ein Abstand auf der ersten Aufnahmeseite 20 vorgesehen.

Selbstverständlich ist der Faserverbindungsbereich 38 durch entsprechende Anordnung der Führungselemente 30 mit dem Faserablagebereich 36 verbunden, zum Beispiel über eine Rampe.

Die zweite Aufnahmeseite 22 unterscheidet sich von der ersten Aufnahmeseite 20 durch die Anordnung des Faserverbindungsbereiches 38.

Selbstverständlich ist der Faserverbindungsbereich 38 der zweiten Aufnahmeseite 22 ebenfalls mit einer Spleißschutzablage 40 versehen, wie der Faserverbindungsbereich 38 der ersten Aufnahmeseite 20.

Auf der zweiten Aufnahmeseite 22 schließt der Faserverbindungsbereich 38 nicht direkt an den Faserablagebereich 36 an, sondern ist um einen Abstand davon beabstandet. Der Faserverbindungsbereich 38 grenzt jedoch an den dem Fasereingang 32 bzw. Faserausgang 34 abgewandten Rand an.

Selbstverständlich ist auch dieser Faserverbindungsbereich 38 durch entsprechende Anordnung der Führungselemente 30 mit dem Faserablagebereich 36 verbunden, zum Beispiel ebenfalls über eine Rampe.

Der Abstand, mit dem der Faserverbindungsbereich 38 der zweiten Aufnahmeseite 22 vom Faserablagebereich 36 beabstandet ist, entspricht dem Abstand mit dem der Faserverbindungsbereich 38 der ersten Aufnahmeseite 20 vom Rand 41 beabstandet ist.

In Figur 4 ist diese Anordnung deutlich zu erkennen. Der Faserverbindungsbereich 38 der zweiten Aufnahmeseite 22 grenzt somit an den Rand 41 an, wobei der Faserverbindungsbereich 38 der ersten Aufnahmeseite 20 an den Faserverbindungsbereich 38 der zweiten Aufnahmeseite 22 angrenzt.

Daran schließen sich dann die Faserablagebereiche 36 der beiden Aufnahmeseiten 20, 22 an.

Anschließend folgen die Fasereingänge 32 bzw. Faserausgänge 34. Der Faserablagebereich 36 ist somit zwischen den Fasereingängen 32 und Faserausgängen 34 einerseits und den Faserverbindungsbereichen 38 andererseits angeordnet.

In anderen Worten liegen die Fasereingänge 32, die Faserausgänge 34 und die Faserablagebereiche 36 zumindest teilweise in demselben Flächenabschnitt des Grundkörpers 14, d.h. in einer Draufsicht auf eine der Aufnahmeseiten 20, 22 betrachtet in demselben Abschnitt. Dieser Flächenabschnitt bildet daher einen Überlappabschnitt F_{U}.

Dagegen liegen die Faserverbindungsbereiche 38 in unterschiedlichen Flächenabschnitten F₁, F₂ der Kassette 10.

In Figur 4 ist ebenfalls gut zu erkennen, dass der Boden 18 über den Grundkörper 14 hinweg nicht in einem bestimmten Level zwischen den beiden Abschlussebenen E₁ und E₂ angeordnet ist, sondern sich sein Abstand zu den Abschlussebenen E₁, E₂ ändert.

Dadurch haben die Aufnahmeräume 26, 28 Abschnitte mit unterschiedlichen Höhen, wobei die Höhe des Aufnahmeraumes 26, 28 als Abstand vom Boden 18 zur zugeordneten Abschlussebene E₁ bzw. E₂ definiert ist.

Im Faserablagebereich 36 haben der erste Aufnahmeraum 26 und der zweite Aufnahmeraum 28 eine erste Höhe h₁ und im Faserverbindungsbereich 38 haben der erste Aufnahmeraum 26 und der zweite Aufnahmeraum 28 eine zweite Höhe h₂.

Im Faserverbindungsbereich 38 verläuft der Boden 18 mittig zwischen den beiden Abschlussebenen E₁ und E₂, wohingegen der Boden 18 im Faserverbindungsbereich 38 der ersten Aufnahmeseite 20 in der Abschlussebene E₂ der zweiten Aufnahmeseite 22 verläuft.

Ebenso verläuft der Boden 18 im Faserverbindungsbereich 38 der zweiten Aufnahmeseite 22 in der Abschlussebene E₁ der ersten Aufnahmeseite 20.

Somit entspricht die erste Höhe h₁ der Aufnahmeräume 26, 28 in etwa der halben Dicke D der Kassette 10 (abzüglich der Stärke des Bodens 18 selbst), wohingegen die zweite Höhe h₂ nahezu der gesamten Dicke D der Kassette 10 (wiederum abzüglich der Stärke des Bodens 18) entspricht.

Auf diese Weise wird gewährleistet, dass die Faserverbindungsbereiche 38 genügend Raum zur Aufnahme einer üblichen Spleißschutzablage 40 aufweisen.

Die Faserablagebereiche 36 liegen somit in flachen Abschnitten 42 der Aufnahmeräume 26, 28, wohingegen die Faserverbindungsbereiche 38 in tiefen Abschnitten 44 der Aufnahmeräume 26, 28 liegen.

Die flachen Abschnitte 42 der Aufnahmeräume 26, 28 liegen daher im gleichen Flächenabschnitt der Kassette, nämlich dem Überlappabschnitt F_{U}.

Dagegen wechseln sich die tiefen Abschnitte 44 des ersten Aufnahmeraumes 26 und des zweiten Aufnahmeraumes 28 ab, sie sind also außerhalb des Überabschnittes Fu in unterschiedlichen Flächenabschnitten F₁, F₂ der Kassette 10 angeordnet.

Im gezeigten Ausführungsbeispiel sind als Funktionsteile 16 am Grundkörper 14 ein Befestigungsmittel 46, ein Fasereingangskanal 48 und ein Faserausgangskanal 50 vorgesehen.

Das Befestigungsmittel 46 umfasst im gezeigten Ausführungsbeispiel einen Zapfen 52 und eine Fixierlasche 54, die in an sich bekannter Weise mit dem Kassettenhalter 12 zusammenwirken können, um die Kassette 10 schwenkbar und in verschiedenen Positionen arretierbar am Kassettenhalter 12 zu befestigen.

Der Fasereingangskanal 48 geht von den Fasereingängen 32 aus und der Faserausgangskanal 50 geht ebenso von den Faserausgängen 34 aus. In anderen Worten mündet der Fasereingangskanal 48 in die Fasereingänge 32 und der Faserausgangskanal 50 mündet in die Faserausgänge 34.

Der Fasereingangskanal 48 und der Faserausgangskanal 50 erstrecken sich leicht beabstandet zum Rand der Kassette 10 parallel hierzu.

Insbesondere sind der Fasereingangskanal 48 und der Faserausgangskanal 50 koaxial zueinander und insbesondere koaxial zum Zapfen 52.

Sowohl der Fasereingangskanal 48 als auch der Faserausgangskanal 50 weisen einen Kanalboden 56 auf, der den jeweiligen Kanal 48, 50 in eine erste Seite und eine zweite Seite unterteilt.

Die erste Seite ist dabei der ersten Aufnahmeseite 20 und die zweite Seite der zweiten Aufnahmeseite 22 zugeordnet. Zum Beispiel geht der Kanalboden 56 in den Boden 18 des Grundkörpers 14 über.

Der Kanalboden 56 kann sich durchgängig vom Anfang des Kanals 48, 50 bis zum Übergang des Kanals 48, 50 an den Grundkörper 14 erstrecken.

Durch den Fasereingangskanal 48 können Lichtwellenleiter bzw. Glasfasern auf eine der Aufnahmeseiten 20, 22 in einen der Aufnahmeräume 26, 28 eingeführt werden. Dort können sie mit einem weiteren Lichtwellenleiter bzw. einer weiteren Glasfaser verbunden, insbesondere verspleißt werden. Die Verbindung bzw. der Spleiß wird dabei im Faserverbindungsbereich 38 abgelegt, und der verbundene Lichtwellenleiter bzw. die verbundene Glasfaser wird durch den Faserausgang 34 und den Faserausgangskanal 50 aus der Kassette 10 herausgeführt.

Die beiden Aufnahmeseiten 20, 22 sind dabei unabhängig voneinander, d. h., dass kein Übergang oder keine Durchführung von einer der Aufnahmeseiten 20, 22 zur anderen Aufnahmeseite 22, 20 vorgesehen ist.

Zwar ist es denkbar, dass Durchbrüche oder Löcher im Boden 18 vorhanden sind, jedoch sind diese nicht dazu vorgesehen, Lichtwellenleiter unter Einhaltung des vorgesehenen Mindestradius zu führen.

Durch die strikte Trennung der beiden Aufnahmeseiten 20, 22 können unter Einhaltung hoher Sicherheits- und Qualitätsanforderungen in einer einzigen Kassette 10, d. h. bei Belegung nur einer bzw. zwei Aufnahmen im Kassettenhalter 12, die Funktionen von zwei Kassetten 10 gleicher Dicke erfüllt werden.

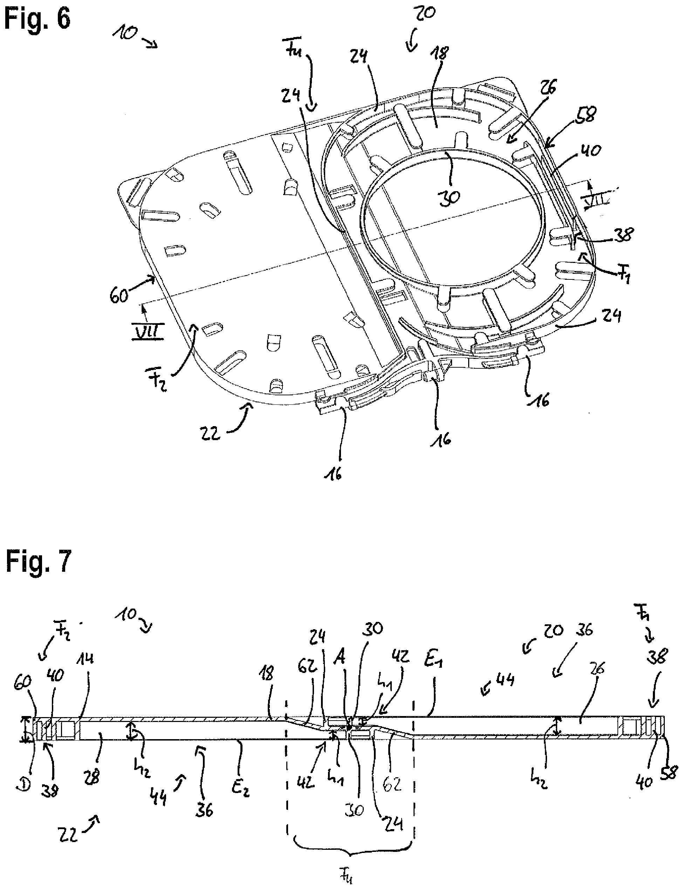

In den Figuren 6 bis 9 ist eine zweite Ausführungsform der Kassette 10 dargestellt, die im Wesentlichen der der ersten Ausführungsform entspricht. Im Folgenden wird daher lediglich auf die Unterschiede eingegangen, wobei gleiche oder funktionsgleiche Teile mit denselben Bezugszeichen versehen sind.

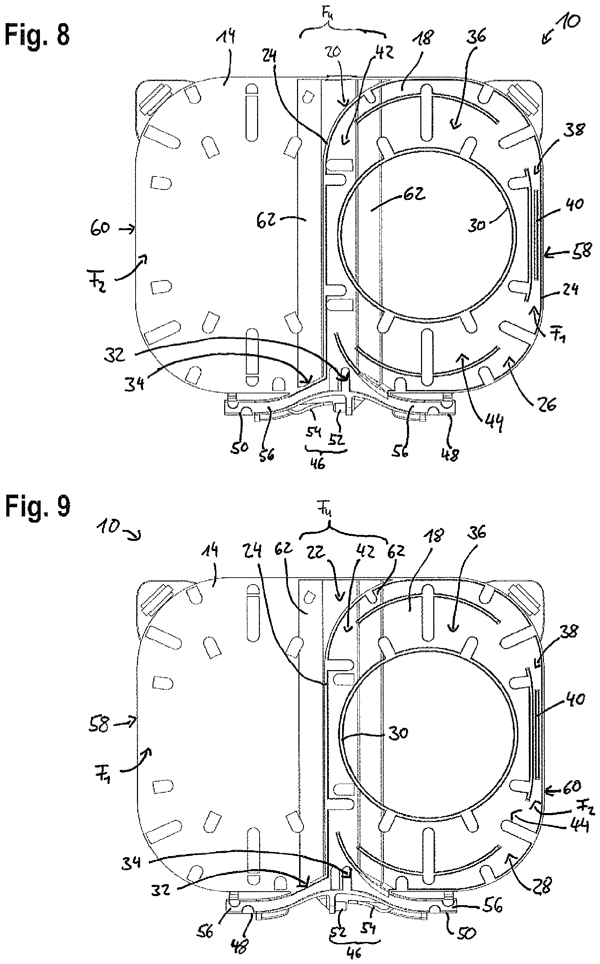

Im Unterschied zur ersten Ausführungsform sind die Aufnahmeseiten 20, 22 der Kassette 10 der zweiten Ausführungsform im Wesentlichen identisch ausgeführt, wie ein Vergleich der Figuren 8 und 9 zeigt.

Die Spleißschutzablagen 40 in dieser Ausführungsform können jeweils zwei Spleiße aufnehmen.

Die Faserverbindungsbereiche 38 liegen in dieser Ausführungsform nicht an einem Rand, der dem Fasereingang 32 bzw. Faserausgang 34 entgegengesetzt ist, sondern einem dazu benachbarten Rand.

Der Faserverbindungsbereich 38 der ersten Aufnahmeseite 20 ist an einem ersten Rand 58 vorgesehen, wohingegen der Faserverbindungsbereich 38 der zweiten Aufnahmeseite 22 an dem zum ersten Rand 58 entgegengesetzten zweiten Rand 60 angeordnet ist.

Der erste Rand 58 und der zweite Rand 60 sind im gezeigten Ausführungsbeispiel die Querseiten der Kassette 10, d. h. diejenige Seite, die quer zum Kassettenhalter 12 stehen.

Die Fasereingänge 32 und Faserausgänge 34 liegen an einem Rand zwischen dem ersten Rand 58 und dem zweiten Rand 60, d. h. an einer Längsseite der Kassette 10.

Wie in Figur 7 zu erkennen, weisen auch die Aufnahmeräume 26, 28 der Kassette 10 der zweiten Ausführungsform unterschiedliche Höhen h₁, h₂ und daher flache Abschnitte 42 und tiefe Abschnitte 44 auf.

Die tiefen Abschnitte 44 der Aufnahmeräume 26, 28 erstrecken sich vom ersten Rand 58 bzw. zweiten Rand 60 aus, sodass in diesen Bereichen der Boden 18 in der Abschlussebene E₁, E₂ des jeweils anderen Aufnahmeraumes 26, 28 verläuft.

Erst nahe der Mitte, bei etwa einem Drittel des Abstandes zwischen dem ersten Rand 58 und dem zweiten Rand 60, verringert sich die Höhe der Aufnahmeräume 26, 28 dadurch, dass der Boden 18 jeweils einen gegenüber den Abschlussebenen E₁, E₂ schrägen Abschnitt 62 aufweist.

Der Boden 18 verläuft in den schrägen Abschnitten 62 zur Mitte hin, bis der Boden 18 schließlich den gleichen Abstand zur ersten Abschlussebene E₁ wie zur zweiten Abschlussebene E₂ hat.

Dann erstreckt sich der Boden 18 wieder parallel zu den Abschlussebenen E₁, E2 und verläuft somit im Bereich mittig zwischen dem ersten Rand 58 und dem zweiten Rand 60 in der Mitte zwischen den beiden Abschlussebenen E₁, E₂.

Der Grundkörper 14 der Kassette 10 bzw. die gesamte Kassette 10 ist daher, bis auf das Befestigungsmittel 46, drehsymmetrisch um eine Achse A, die parallel zu den beiden Abschlussebenen E₁, E₂ durch die Mitte der Kassette 10 verläuft. Die Achse A verläuft auch senkrecht zum Kassettenhalter 12.

Auf diese Weise entstehen sehr große tiefe Abschnitte 44 der Aufnahmeräume 26, 28, in denen sowohl die entsprechenden Faserverbindungsbereiche 38 als auch weite Teile der Faserablagebereiche 36 vorgesehen sind.

In den Figuren 10a, 10b und 10c ist ein System 64 zur Verbindung von wenigstens zwei Lichtwellenleitern dargestellt. Das System 64 umfasst die Kassette 10 der ersten Ausführungsform (Figuren 1 bis 5) und wenigstens ein Faserverbindungselement 66, das im Faserverbindungsbereich 38 einer der Aufnahmeräume 26, 28 angeordnet ist. In diesen Figuren sind die Lichtwellenleiter 68, die mittels der Faserverbindungselemente 66 verbunden werden, zur besseren Übersicht nur angedeutet.

Das Faserverbindungselement 66 ist im gezeigten Ausführungsbeispiel ein Spleißschutz, genauer ein Crimpspleißschutz. Das Faserverbindungselement 66 kann jedoch ebenso ein Schrumpfspleißschutz, eine Patchkupplung, ein Splitter oder dergleichen sein.

Das Faserverbindungselement 66 ist ein bekanntes Bauteil und hat daher eine vorgegebene Bauhöhe B. Ein üblicher Crimpspleißschutz hat zum Beispiel eine Bauhöhe B von 3,2 mm.

In den Faserverbindungsbereichen 38 muss daher genügend Raum für das Faserverbindungselement 66 vorhanden sein, sodass die Höhe der Aufnahmeräume 26, 28 in den Faserverbindungsbereichen 38 wenigstens der Bauhöhe B des Faserverbindungselements 66 entspricht.

Dadurch ergibt sich die Dicke D der Kassette 10 als im Wesentlichen die Bauhöhe B, z.B. als die Bauhöhe B zuzüglich der Stärke des Bodens 18.

Die Dicke D der Kassette 10 ist daher kleiner als das 1,6-fache der Bauhöhe B des Faserverbindungselementes 66, zum Beispiel um Raum für einen Deckel (nicht gezeigt) vorzusehen.

In den Figuren 11a und 11b ist eine zweite Ausführungsform des Systems 64 dargestellt.

Das System 64 der zweiten Ausführungsform unterscheiden sich vom System 64 der ersten Ausführungsform lediglich darin, dass die zweite Ausführungsform der Kassette 10 (Figuren 6 bis 9) verwendet wird.

Denkbar ist selbstverständlich auch eine beliebige Kombination der Merkmale der zuvor beschriebenen Ausführungsformen.

## Patentansprüche

1. Kassette, insbesondere Spleißkassette, zur Aufnahme von Lichtwellenleitern (68), mit einem Boden (18), der eine erste Aufnahmeseite (20) und eine zweite Aufnahmeseite (22) aufweist, wobei die beiden Aufnahmeseiten (20, 22) unabhängig voneinander zu nutzen sind und jede der beiden Aufnahmeseiten (20, 22) einen Fasereingang (32), einen Faserausgang (34) und einen Faserverbindungsbereich (38) aufweist, wobei die Faserverbindungsbereiche (38) der beiden Aufnahmeseiten (20, 22) in unterschiedlichen Flächenabschnitten (F₁, F₂) der Kassette (10) angeordnet sind.

2. Kassette nach Anspruch 1, **dadurch gekennzeichnet, dass** die Kassette wenigstens einen Überlappabschnitt (F_{U}) aufweist, in der sowohl die erste Aufnahmeseite (20) als auch die zweite Aufnahmeseite (22) zumindest teilweise angeordnet sind.

3. Kassette nach Anspruch 1 oder 2, **dadurch gekennzeichnet, dass** jeder der Faserverbindungsbereiche (38) eine Spleißschutzablage (40) aufweist.

4. Kassette nach einem der vorhergehenden Ansprüche, **dadurch gekennzeichnet, dass** den Faserverbindungsbereichen (38) die volle nutzbare Dicke der Kassette (10) zur Verfügung steht und/oder dass in den Flächenabschnitten (F₁, F₂), in denen die Faserverbindungsbereiche (38) angeordnet sind, jeweils nur eine der Aufnahmeseiten (20, 22) ausgebildet ist.

5. Kassette nach einem der vorhergehenden Ansprüche, **dadurch gekennzeichnet, dass** jede der beiden Aufnahmeseiten (20, 22) vom Boden (18) abstehende Wände (24) aufweist, die jeweils einen Aufnahmeraum (26, 28) zur Aufnahme von Lichtwellenleitern je Aufnahmeseite (20, 22) begrenzen, wobei die Wände (24) einer der Aufnahmeseiten (20, 22) in einer gemeinsamen Abschlussebene (E₁, E₂) des jeweiligen Aufnahmeraumes (26, 28) enden.

6. Kassette nach Anspruch 5, **dadurch gekennzeichnet, dass** jeder der Aufnahmeräume (26, 28) einen flachen Abschnitt (42) mit einer ersten Höhe (h₁) und einen tiefen Abschnitt (44) mit einer zweiten Höhe (h₂) aufweist, wobei die erste Höhe (h₁) kleiner ist als die zweite Höhe (h₂).

7. Kassette nach Anspruch 6, **dadurch gekennzeichnet, dass** der Boden (18) in einem tiefen Abschnitt (44) einer der Aufnahmeräume (26, 28) in der Abschlussebene (E₁, E₂) des jeweils anderen der Aufnahmeräume (26, 28) verläuft.

8. Kassette nach Anspruch 6 oder 7, **dadurch gekennzeichnet, dass** die Faserverbindungsbereiche (38) im tiefen Abschnitt (44) ihres Aufnahmeraumes (26, 28) vorgesehen sind und/oder dass jeweils ein Faserablagebereich (36) zumindest teilweise im flachen Abschnitt (42) jedes Aufnahmeraumes (26, 28) vorgesehen ist.

9. Kassette nach einem der vorhergehenden Ansprüche, **dadurch gekennzeichnet, dass** die Kassette einen Fasereingangskanal (48) und/oder einen Faserausgangskanal (50) aufweist, wobei der Fasereingangskanal (48) und/oder der Faserausgangskanal (50) durch einen Kanalboden (56) in eine erste Seite, die der ersten Aufnahmeseite (20) zugeordnet ist, und in eine zweite Seite geteilt ist, die der zweiten Aufnahmeseite (22) zugeordnet ist.

10. Kassette nach einem der vorhergehenden Ansprüche, **dadurch gekennzeichnet, dass** die Kassette (10) wenigstens ein Befestigungsmittel (46) aufweist, insbesondere wobei das Befestigungsmittel (46) zur schwenkbaren Befestigung der Kassette (10) an einem Kassettenhalter (12) dient.

11. Kassette nach einem der vorhergehenden Ansprüche, **dadurch gekennzeichnet, dass** der Faserverbindungsbereich (38) der zweiten Aufnahmeseite (22) an einem Rand der Kassette (10) angeordnet ist, wobei der Faserverbindungsbereich (38) der ersten Aufnahmeseite (20) an den Faserverbindungsbereich (38) der zweiten Aufnahmeseite (22) angrenzt und/oder beabstandet vom Rand ist.

12. Kassette nach einem der Ansprüche 1 bis 10, **dadurch gekennzeichnet, dass** der Faserverbindungsbereich (38) der ersten Aufnahmeseite (20) an einem ersten Rand (58) der Kassette (10) angeordnet ist und der Faserverbindungsbereich (38) der zweiten Aufnahmeseite (22) an einem zweiten Rand (60) der Kassette (10) angeordnet ist, wobei der ersten Rand (58) zum zweiten Rand (60) entgegengesetzt ist.

13. Kassette nach Anspruch 12, **dadurch gekennzeichnet, dass** der Boden (18) am ersten Rand (58) in der Abschlussebene (E₂) des zweiten Aufnahmeraumes (28) liegt, dass der Boden (18) am zweiten Rand (60) in der Abschlussebene (E₁) des ersten Aufnahmeraumes (26) liegt, und dass der Boden (18) zumindest in der Mitte zwischen dem ersten Rand (58) und dem zweiten Rand (60) mittig zwischen den beiden Abschlussebenen (E₁, E₂) verläuft.

14. Kassette nach einem der vorhergehenden Ansprüche, **dadurch gekennzeichnet, dass** die erste Aufnahmeseite (20) und die zweite Aufnahmeseite (22) im Wesentlichen identisch ausgeführt sind und/oder dass die Dicke (D) der Kassette (10) etwa 5 mm oder weniger beträgt.

15. System zur Verbindung von wenigstens zwei Lichtwellenleitern (68), mit einer Kassette (10) nach einem der vorhergehenden Ansprüche und einem Faserverbindungselement (66), insbesondere einem Spleißschutz, das eine vorgegebene Bauhöhe (B) aufweist, wobei die Dicke (D) der Kassette (10) kleiner als das 1,6-fache der Bauhöhe (B) des Faserverbindungselementes (66) ist, insbesondere im Wesentlichen der Bauhöhe (B) des Faserverbindungselementes (66) entspricht.
